# EUROPEAN PATENT APPLICATION

(11) **EP 1 916 349 A2**
(43) Date of publication of application: **30.04.2008**
(21) Application number: 07380271.2
(22) Date of filing: 05.10.2007
(51) Int. Cl.: E04B 1/58, E04B 1/24

(54) **Angular joint element for metal carpentry**

(30) Priority: 18.10.2006 ES 200602644
(71) Applicant: Murcia Alonso, Antonio, 03369 Rafal (ES)
(72) Inventor: Murcia Alonso, Antonio, 03369 Rafal (ES)
(74) Representative: Gislon, Gabriele

(57) **Abstract**

The invention relates to an angular joint element for metal carpentry. This angular joint element facilitates the assembly at its corner portions of tubular profiles forming side uprights (5) and crosspieces (6) for the formation of simple or multiple frames for building. The angular joint element (10) has two hollow branches (1, 2) with a cross-section equivalent to that of the upright and crosspiece profiles (5, 6), such that the ends of said branches are arranged end-to-end with respective ends of said uprights and crosspieces, forming a corner of the frame and being joined to said profiles (5, 6) by welding or adhesion with the intervention of inner support cores (7, 8) which are introduced in the openings of respective end-to-end members (1, 2, 5, 6) and can provide a temporary linking.

## Description

### Technical Field

The present invention relates to the field of metal carpentry and particularly to frames for building obtained on the basis of profiles forming uprights or side pillars and top and base crosspieces attached to one another by corner parts joined firmly to said profiles generally by welding or by adhesive joining.

### Background of the Invention

A number of proposals to form corner parts for metal carpentry are known from, for example, utility models ES-A- 1020028, ES-A-1041304, ES-A-1051072, ES-A-1048909, as well as patents ES-A-2128462, ES-A-2222855, and ES-A-2218891.

The above documents do not offer an alternative for the firm connection of such corner members, by welding or by means of the adhesive joining for example, in a simple and flexible manner to the upright and transverse profiles, for the purpose of obtaining a solid frame for building which is adapted to the specific measurements of the wall gap or opening in which it must be installed.

### Disclosure of the Invention

The present invention provides an angular joint element for metal carpentry, which is applicable to the formation of simple frames or multiple frames (two or more adjacent frames) for building of the type formed by tubular profiles with a generally quadrangular cross-section forming uprights and crosspieces assembled at their corner portions. The proposal of this patent offers an angular joint element provided with either two branches (L-shaped configuration), three branches (T-shaped configuration), or four branches (cross-shaped configuration), said branches being hollow and generally perpendicular to each other. The branches offer a cross-section equivalent to that of the mentioned upright and crosspiece profiles, such that the ends of said branches can be arranged end-to-end with respective ends of said uprights and crosspieces, thus forming a corner of the frame or junction between frames. The angular joint element is joined to said profiles by welding or adhesion using inner support cores as an auxiliary means. Said cores are introduced in the openings of the respective hollow end-to-end arranged members, with a section of the cores extending towards the inside of the members.

Alternatively, a joint could be achieved only by a tight-fit insertion of the mentioned cores in the hollow end-to-end arranged members. Although this linking would not be as firm as that provided by adhesion or by weld joining, it would be acceptable in the case of frames envisaged to be immediately fixed on-site because they would then be bound to the structure by the construction material used as binder.

It is also envisaged that the two-branch joint element has an inclination other than 90 degrees between the branches forming it, and that in any of the two to four-branch variants, such branches have different inclinations.

In the event that the joint element is provided with a T-shaped or cross-shaped configuration, the vertical central branch generally has a greater width than the side branches.

According to an advantageous embodiment of the invention, the proposed joint element is formed from a die-cut and folded metal plate configuring said hollow angular joining branches, which are at least two in number. Such an embodiment offers a very favorable production cost compared to other joining or connecting corner parts described in the prior art.

According to another advantageous embodiment of the invention, the joint element is obtained by attaching at least two tubular members having respective adjacent ends cut in an oblique plane, said two tubular members being joined together end-to-end at their adjacent oblique ends preferably by welding, although other joining techniques are possible. The two tubular members can be obtained by cutting from the same tubular profile than the corresponding uprights and/or crosspieces, and this alternatively offers also a favorable production cost for the joint element of the present invention.

### Brief Description of the Drawings

The previous and other advantages and features will be better understood from the following detailed description with reference to the accompanying drawings, in which:
Figure 1 is an exploded perspective view of a T-shaped angular joint element according to the invention arranged in relation to one upright and two crosspieces, to which it must be joined so as to form a frame, and auxiliary inner support cores;
Figure 2 is an exploded perspective view of an L-shaped angular joint element according to the invention arranged in relation to one upright and one crosspiece, to which it must be joined so as to form a frame, and auxiliary inner support cores;
Figure 3 is a cross-sectional view of one of the branches of a joint element obtained from a die-cut and folded metal plate according to an embodiment of the invention;
Figure 3A is shows a cross-sectional view of one of the branches of a joint element obtained by a molding technique according to another embodiment of the invention;
Figure 4 is an exploded perspective view of a cross-shaped, four-branched angular joint element according to the invention arranged in relation to two uprights and two crosspieces, to which it must be joined so as to form a frame, and auxiliary inner support cores;
Figure 5 is an exploded perspective view similar to Figure 2, but with the two branches of the joint element being non-perpendicular to each other to allow a joint with an obtuse angle;
Figure 6 is an exploded perspective view of two tubular members with which an L-shaped angular joint element according to another embodiment of the invention can be obtained;
Figure 7 is an exploded perspective view of the two tubular members of Figure 6 assembled to form the joint element and arranged in relation to an upright and a crosspiece, to which it must be joined so as to form a frame, and auxiliary inner support cores;
Figure 8 is a side view of a T-shaped angular joint element according to the invention formed from three tubular members;
Figure 9 is a side view of a cross-shaped angular joint element according to the invention formed from four tubular members; and
Figure 10 is a side view of an obtuse angle-shaped angular joint element according to the invention formed from two tubular members.

### Detailed Description of an Embodiment of the Invention

Referring to the figures in general, the angular joint element for metal carpentry according to the present invention is applicable to the formation of simple or multiple frames for building, said frames being of the type comprising tubular profiles forming uprights or side frame parts 5 and crosspieces or transverse frame parts 6, which are assembled at their corner portions through the mentioned joint element 10, 11, 12, 13.

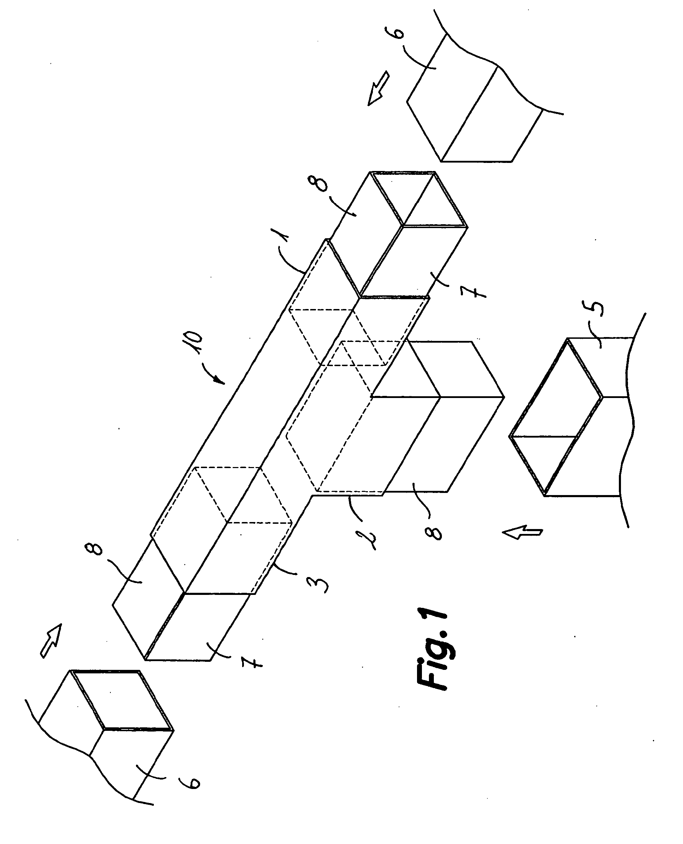

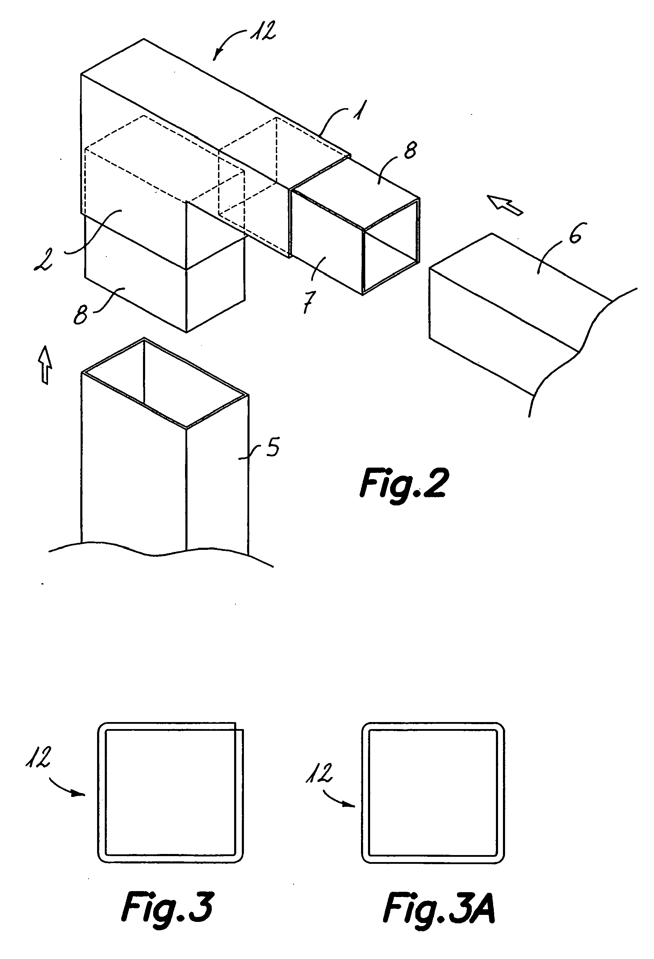

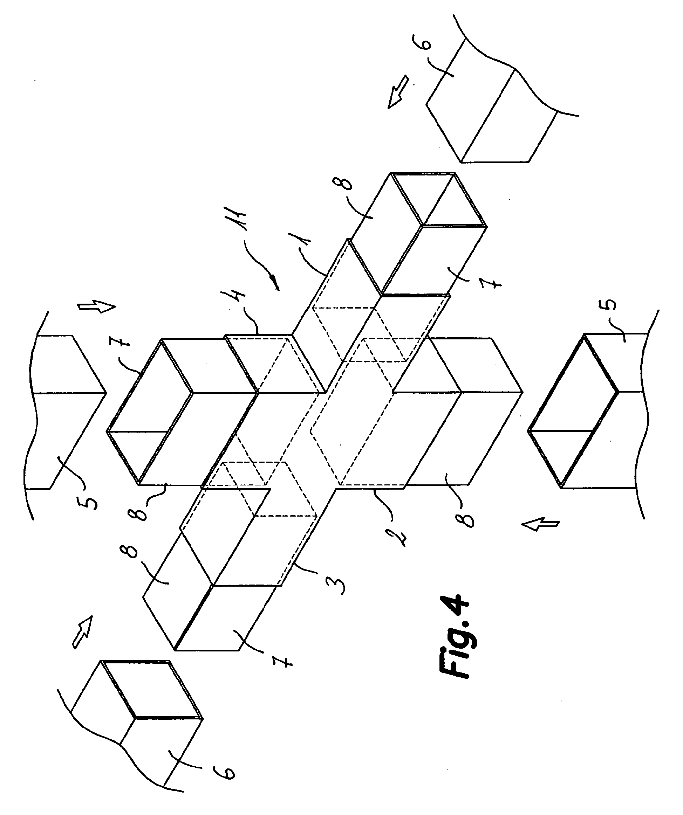

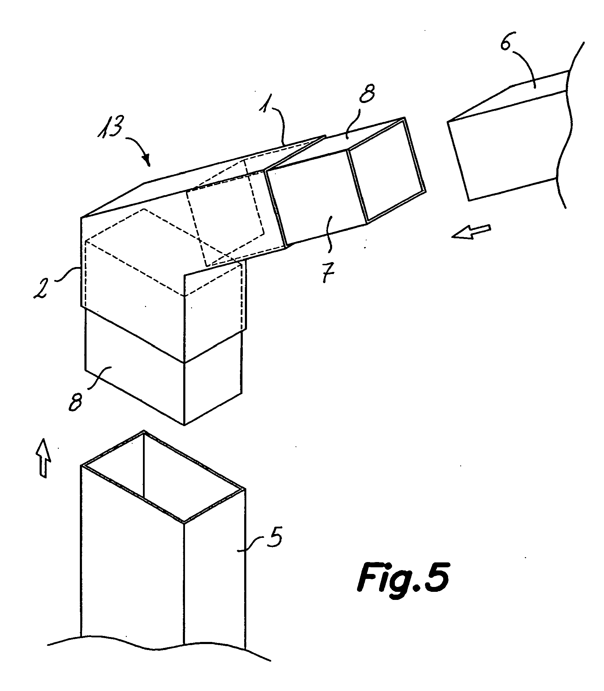

The angular joint element 10, 11, 12, 13 according to the invention offers several configurations integrating two to four hollow branches 1, 2, 3, 4, thus providing, for example, a T-shaped configuration as shown in Figure 1, a right angle L-shaped configuration as shown in Figure 2, a cross-shaped configuration as shown in Figure 4, and an obtuse angle L-shaped configuration as shown in Figure 5. Said hollow branches 1, 2, 3, 4 of the joint element have a cross-section equivalent to that of the mentioned profiles forming the uprights 5 and crosspieces 6 of the frame, such that the ends of said branches can be arranged end-to-end with respective ends of the uprights 5 and crosspieces 6 to form a corner or a junction of the frame. The angular joint elements 10, 11, 12, 13 are joined to uprights 5 and crosspieces 6 by welding or adhesion, with the intervention of inner support cores 7, 8 which are introduced in the openings of the respective members prior to connecting them end-to-end. Figures 1, 2, 4 and 5 show the mentioned uprights 5 and crosspieces 6 of the frame in a situation prior to their end-to-end connection and subsequent welding or adhesive joining with the aid of the mentioned support cores 7, 8.

The inner support cores 7, 8 are formed by respective juxtaposed angular profiles having an L-shaped cross-section. The flanges of said L-shaped cross-section of each inner support core 7, 8 have a smaller width than the corresponding sides of the profiles forming the uprights 5 and crosspieces 6 of the frame to which they are attached, and provide an inner support for the angular joint element and uprights 5 and crosspieces 6 forming a frame corner or a junction between frames.

As has been indicated above, the mentioned support cores 7, 8 by themselves can provide a provisional linking of the angular joint elements to the upright 5 and crosspiece 6 profiles, which joining must then be reinforced by fixing the frame on-site, for example by a binding construction material.

In a usual configuration, the mentioned branches 1, 2, 3, 4, which are at least two in number, are perpendicular to each other, although one or more thereof can meet at the joint element acting as a joint with an inclination greater or lower than 90 degrees.

As regards the cross-section of the mentioned branches 1, 2, 3, 4, which are at least two in number, it is generally quadrangular and particularly rectangular, although the invention is fully applicable to frames delimited by uprights and crosspieces with a polygonal cross-section of any span and style, in which case the branches of the joint element will have an equivalent cross-section.

The branches of the joint element 10, 11, 12, 13 being described can also have different spans according to the features of the uprights 5 and crosspieces 6 integrating the frame to which they must be joined to form said frame.

In one exemplary embodiment shown in Figure 3, the angular joint element 12 of the invention is formed by a die-cut and folded metal plate configuring said hollow angular joining branches 1, 2, 3, 4, which are at least two in number, without the need of welding or adhesive joining. By means of such constitution, a joint element with a very reasonable production cost can be obtained and furthermore, as two of the walls configuring the hollow of the joint element have the possibility of a slight movement by elastic deformation, the insertion of the auxiliary angular profiles 7, 8 inside the joint element during the joining process, either using welding or adhesive, is facilitated.

In an alternative embodiment shown in Figure 3A, the mentioned angular joint element 12 is formed by a one-piece body obtained by molding, advantageously by metal casting, said one-piece body defining said hollow angular joining branches 1, 2, 3, 4, which are at least two in number.

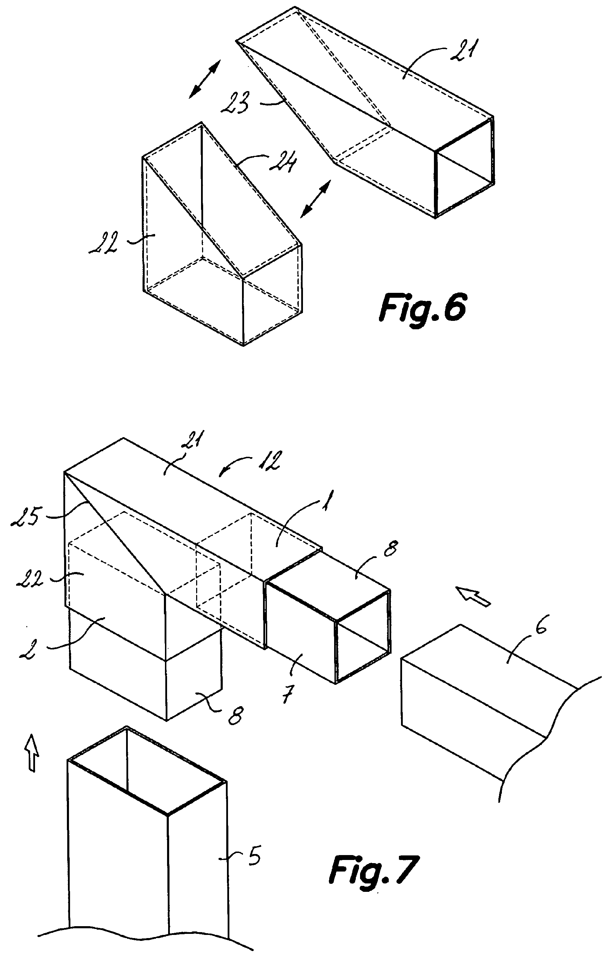

In Figures 6 to 10 a further alternative embodiment is shown, wherein the angular joint element 10, 11, 12, 13 of the invention is obtained from two or more tubular members 21, 22, 26, 27, 28, 31, 32, 33, 34, 39, 40 joined together.

Figure 6 shows two of said tubular members 21, 22 intended in this case to form a right angle L-shaped angular joint element 12 shown in Figure 7. The mentioned tubular members 21, 22 have respective remote ends cut through planes perpendicular to their centerlines and respective adjacent ends cut through complementary oblique planes 23, 24. The first tubular member 21 is square cross-section while the second tubular member 22 is rectangular cross-section. Therefore, the slant angles of said oblique planes 23, 24 are selected in order to obtain the right angle L-shaped angular joint element 12 shown in Figure 7 having a hollow vertical branch 2 wider than a hollow horizontal branch 1. In the event that the two tubular members 21, 22 has the same cross-section, the slant angles of said oblique planes 23, 24 should obviously be 45 degrees to obtain a right angle L-shaped angular joint element.

As shown in Figure 7, the right angle L-shaped angular joint element 12 is comprised of the two tubular members 21, 22 of Figure 6 arranged with the respective adjacent oblique plane-cut ends 23, 24 in contact to each other and joined together, for example by welding, adhesive, or other procedure, to form a seam including corner diagonal seam portions 25. The cross-sections of the two tubular members 21, 22 are equivalent to the cross-sections of the corresponding profiles forming an upright 5 and a crosspiece 6 (not shown in Figure 7) of the frame. The right angle L-shaped angular joint element 12 is to be then joined to upright 5 and crosspiece 6 by welding or adhesion with the intervention of juxtaposed L-shaped inner support cores 7, 8 introduced in the openings of the respective members prior to connecting them end-to-end, as explained above with reference to Figures 1 to 5.

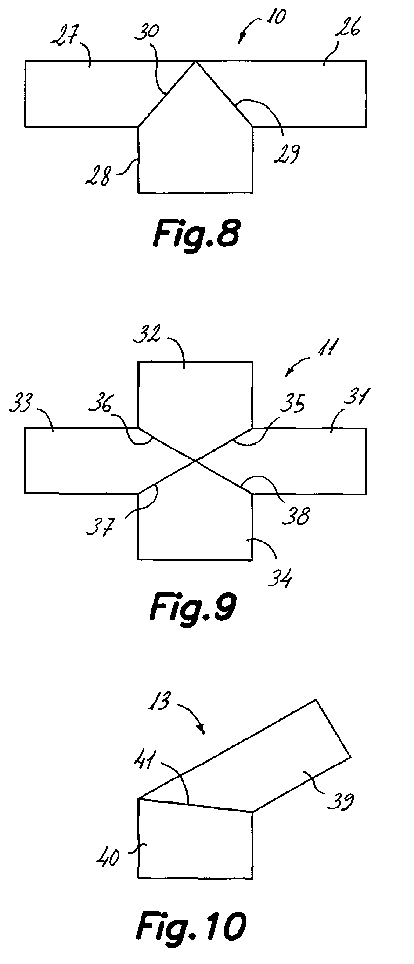

Figure 8 shows a T-shaped angular joint element 10 formed from three tubular members 26, 27, 28 having respective adjacent ends cut through oblique planes, arranged end-to-end and joined together, for example by welding, adhesive, or other procedure, along seams including diagonal seam portions 29, 30. Thus, the T-shaped angular joint element 10 comprises three hollow branches having respective cross-sections equivalent to those of the corresponding profiles forming one upright 5 and two mutually aligned crosspieces 6 (not shown in Figure 8) of the frame. The T-shaped angular joint element 10 is to be joined to the upright 5 and crosspieces 6 by welding or adhesion with the intervention of juxtaposed L-shaped inner support cores 7, 8 introduced in the openings of the respective members prior to connecting them end-to-end, as explained above with reference to Figures 1 to 5.

Figure 9 shows a cross-shaped angular joint element 11 formed from four tubular members 31, 32, 33, 34 having respective adjacent ends cut through intersecting oblique planes. The four tubular members 31, 32, 33, 34 are arranged end-to-end and joined together, for example by welding, adhesive, or other procedure, along seams including diagonal seam portions 35, 36, 37, 38. The cross-shaped angular joint element 10 thus defines four hollow branches, the respective cross-sections of which are equivalent to the cross-sections of the corresponding profiles forming two mutually aligned uprights 5 and two mutually aligned crosspieces 6 (not shown in Figure 9) of the frame. The cross-shaped angular joint element 11 is to be joined to the uprights 5 and crosspieces 6 by welding or adhesion with the intervention of juxtaposed L-shaped inner support cores 7, 8 introduced in the openings of the respective members prior to connecting them end-to-end, as explained above with reference to Figures 1 to 5.

Figure 10 shows an obtuse angle angular joint element 13 which is comprised of the two tubular members 39, 40 arranged with respective adjacent oblique plane-cut ends in contact to each other and joined together, for example by welding, adhesive, or other procedure, to form a seam including a corner diagonal seam portion 41 similarly to the right angle L-shaped angular joint element 12 of Figure 7, with the difference that here, the slant angles of said oblique plane-cut ends are selected in order to obtain the obtuse angle angular joint element 13 having a hollow vertical branch wider than a hollow inclined branch. Alternatively, the slant angles of the oblique plane-cut ends could be selected to form an acute angle angular joint element (not shown), or the two tubular members 39, 40 could have the same cross-section. In any case, the cross-sections of the two tubular members 39, 40 are equivalent to those of the corresponding profiles forming one upright 5 and one crosspiece 6 (not shown in Figure 10) of the frame. The obtuse angle angular joint element 13 is to be joined to the upright 5 and crosspiece 6 by welding or adhesion with the intervention of juxtaposed L-shaped inner support cores 7, 8 introduced in the openings of the respective members prior to connecting them end-to-end, as explained above with reference to Figures 1 to 5.

Alternative embodiments (not shown) similar to the T-shaped and cross-shaped angular joint elements described above in relation with Figures 8 and 9, respectively, are also envisaged to fall within the scope of the invention, wherein the slant angles of the oblique plane-cut ends of the tubular members are selected in order to obtain obtuse and/or acute angles between the branches or combinations of obtuse and/or acute angles with right angles.

Several improvements and/or variations to the described and shown embodiments will readily occur to those skilled in the art without departing from the scope of the invention as defined in the attached claims.

## Claims

1. An angular joint element for metal carpentry, particularly applicable to the formation of simple or multiple frames for building, said frames being of the type comprising tubular profiles forming uprights (5) and crosspieces (6) assembled at their corner portions, **characterized in that** the angular joint element configures at least two hollow branches (1, 2) having a cross-section equivalent to that of the mentioned upright and crosspiece profiles (5, 6), such that the ends of said branches can be arranged end-to-end with respective ends of said uprights and crosspieces, forming a corner of the frame and being joined to said upright and crosspiece profiles (5, 6) by welding or adhesion with the intervention of inner support cores (7, 8) which are introduced in the openings of the respective end-to-end arranged members and are capable of provide a temporary link.

2. An angular joint element according to claim 1, **characterized in that** said at least two hollow branches (1, 2) are perpendicular.

3. An angular joint element according to claim 1, **characterized in that** said at least two hollow branches (1, 2) meet forming a dihedral greater than 90 degrees.

4. An angular joint element according to claim 1, **characterized in that** said at least two hollow branches (1, 2) meet forming a dihedral lower than 90 degrees.

5. An angular joint element according to claim 1, **characterized in that** said at least two branches (1, 2) have a quadrangular cross-section.

6. An angular joint element according to claim 1, **characterized in that** said at least two branches (1,2) have a polygonal cross-section.

7. An angular joint element according to claim 1, **characterized in that** it comprises three hollow branches, one of which is a central branch (2) and two of which are side branches (1, 3) adopting a T-shaped structure.

8. An angular joint element according to claim 1, **characterized in that** it comprises four hollow branches (1, 2, 3, 4) adopting a cross-shaped structure.

9. An angular joint element according to claim 7 or 8, **characterized in that** the central branch (2) has a greater width than the side branches (1, 3).

10. An angular joint element according to any one of the previous claims, **characterized in that** it is formed by a die-cut and folded metal plate configuring said hollow angular joining branches (1, 2, 3, 4), which are at least two in number.

11. An angular joint element according to any one of the claims 1 to 9, **characterized in that** it is formed by a one-piece body obtained by molding, which body configures said at least two hollow angular joining branches (1, 2, 3, 4).

12. An angular joint element according to claim 1, **characterized in that** said inner cores are formed by angular profiles (7, 8) with an L-shaped section having a width of their flanges that is smaller than that of the sides of said profiles (5, 6) to which they are attached, providing an inner support prior to the linking of the angular joint element forming a corner of a frame or junction between frames.

13. An angular joint element according to any one of the claims 1 to 9, **characterized in that** it is formed from at least two tubular members (21, 22) having respective adjacent ends cut through oblique planes (23, 24), in contact to each other and joined together along at least one seam including diagonal seam portions (25).

14. An angular joint element according to claim 13, **characterized in that** said at least one seam including diagonal seam portions (25) is a weld seam.

15. An angular joint element according to claim 13, **characterized in that** said at least one seam including diagonal seam portions (25) is an adhesive seam.
